# FASCICULE DE BREVET EUROPEEN

(11) **EP 0 654 888 B1**
(45) Date de publication et mention de la délivrance du brevet: **13.01.1999**
(21) Numéro de dépôt: 94410099.9
(22) Date de dépôt: 15.11.1994
(51) Int. Cl.: H02M 7/217, H02M 1/12

(54) **Convertisseur alternatif-continu comportant un dispositif de filtrage**
Wechselstrom-Gleichstromwandler mit einer Filtervorrichtung
AC-DC converter comprising a filter device

(30) Priorité: 24.11.1993 FR 9314144
(43) Date de publication de la demande: 24.05.1995
(73) Titulaire: MGE-UPS SYSTEMS, 38240 Meylan (FR)
(72) Inventeur: Philippe, Daniel, F-38050 Grenoble Cedex 09 (FR)
(74) Mandataire: Jouvray, Marie-Andrée

(56) Documents cités:
- WO-A-89/05059
- WO-A-93/12576
- US-A- 4 386 394

## Description

L'invention concerne un convertisseur alternatif-continu comportant :
- une ligne d'entrée comportant au moins deux conducteurs,
- des moyens de redressement et de filtrage connectés à la ligne d'entrée,
- des moyens de contrôle et de régulation d'au moins une tension continue de sortie connectés à la sortie des moyens de redressement et de filtrage et comprenant un circuit hacheur positif et un circuit hacheur négatif,
- des moyens de mesure du courant dans les moyens de redressement et de filtrage, et
- des moyens de régulation de la tension de sortie en fonction des courants mesurés par lesdits moyens de mesure,

Un convertisseur de ce type comportant des moyens de mesure du courant circulant dans des moyens de redressement est décrit dans le document US-4,386,394.

Les convertisseurs de courant alternatif-continu comportent généralement un pont redresseur pour redresser le courant alternatif de la ligne d'entrée et un dispositif de régulation fournissant en sortie une ou plusieurs tensions continues régulées. Dans les convertisseurs sans isolement entre l'entrée et la sortie, un conducteur de neutre de la ligne d'entrée peut être rapporté directement sur la sortie, il servira dans la plupart des cas de référence de tension pour tout le convertisseur. Les dispositifs fournissant des tensions continues de forte puissance comportent, de manière connue, des circuits hacheurs, notamment lorsque la tension de sortie doit être supérieure à la tension d'entrée. Le redresseur, constitué généralement par des diodes ou des thyristors, et les circuits hacheurs perturbent le courant de la ligne d'entrée en augmentant le taux de distorsion et d'harmoniques. Ces perturbations sont atténuées par un circuit de filtrage comportant des inductances installées en série sur la ligne d'entrée avant le redresseur et des condensateurs installés en parallèle en sortie du redresseur avant les circuits hacheurs.

La demande de brevet WO 93/12576 décrit un convertisseur avec un hacheur positif et négatif et comportant un tel circuit de filtrage avec des inductances disposées entre une source de tension et un redresseur et des condensateurs disposés en sortie dudit redresseur.

Ce circuit de filtrage est un filtre LC ou RLC d'ordre supérieur à un dont le fonctionnement peut être perturbé par des échelons de courant lors de la mise en conduction des diodes ou des thyristors du circuit redresseur. Ces échelons de courants excitent le circuit de filtrage et le mettent en oscillation à chaque commutation. Ces oscillations, peu amorties par la faible résistance des circuits et du réseau, produisent des courants parasites qui se superposent au courant du réseau en créant des perturbations. Il existe des circuits de filtrage surdimensionnés qui limitent les effets des oscillations en baissant fortement la fréquence de résonance du filtre LC. Les valeurs des inductances d'entrée et des condensateurs, ainsi que le volume et le coût du circuit de filtrage deviennent alors très élevés.

L'invention a pour but un convertisseur comportant un dispositif de filtrage avec amortissement des oscillations.

Selon l'invention, les moyens de mesure comportent des moyens de détection fournissant aux moyens de régulation des signaux représentatifs des composantes positives et négatives des courants mesurés, les moyens de régulation commandant le circuit hacheur positif en fonction de la composante positive et le circuit hacheur négatif en fonction de la composante négative.

Selon un premier mode de réalisation, les moyens de redressement et de filtrage comportent un circuit redresseur, les moyens de mesure du courant mesurant les courants d'entrée du circuit redresseur.

Selon un développement du premier mode de réalisation, les moyens de mesure du courant comporte un transformateur de mesure de courant associé à chaque conducteur de la ligne.

Selon un second mode de réalisation, les moyens de redressement et de filtrage comportent un circuit redresseur, les moyens de mesure du courant mesurant les courants de sortie du circuit redresseur.

Selon un développement de l'invention, les moyens de régulation comportent des moyens de mesure de courants des circuits hacheurs, des moyens de mesure de la tension de sortie, et un circuit de contrôle comportant des entrées connectées aux moyens de mesure de courants dans les moyens de redressement et de filtrage, aux moyens de mesure de courants des circuits hacheurs et aux moyens de mesure de la tension de sortie, le circuit de contrôle comportant au moins une sortie connectée à une entrée de commande des circuits hacheurs.

Dans un mode préférentiel de réalisation, le circuit de contrôle comporte une première boucle de régulation comportant un premier opérateur, connecté aux moyens de mesure de la tension de sortie, et un régulateur de tension, une seconde boucle de régulation comportant un second opérateur, connecté aux moyens de mesure du courant dans les moyens de redressement et de filtrage, et un régulateur de courant, et d'une troisième boucle de régulation comportant un troisième opérateur, connecté aux moyens de mesure du courant du hacheur, et un régulateur de courant.

Selon un mode particulier de réalisation, la ligne d'entrée comporte un conducteur neutre de référence, les moyens de redressement et de filtrage comportant un premier condensateur de filtrage, connecté entre une première sortie desdits moyens et le conducteur neutre, et un second condensateur de filtrage, connecté entre une seconde sortie desdits moyens et le conducteur neutre, deux hacheurs indépendants, connectés respectivement entre le conducteur neutre et les première et seconde sorties, fournissant deux tensions de sortie, l'une positive et l'autre négative par rapport au potentiel du conducteur neutre.

D'autres avantages et caractéristiques ressortiront plus clairement de la description qui va suivre d'un mode de mise en oeuvre de l'invention, donné à titre d'exemple non limitatif, et représenté aux dessins annexés, dans lesquels:

La figure 1 représente le schéma d'un convertisseur de type connu.

La figure 2 montre le mode de régulation d'un hacheur du convertisseur de la figure 1.

La figure 3 représente le schéma d'un convertisseur selon un mode de réalisation de l'invention.

La figure 4 montre un mode de régulation d'un hacheur du convertisseur selon la figure 3.

La figure 5 représente le schéma d'un mode de réalisation d'un régulateur du courant d'entrée.

La figure 6 illustre un courant d'entrée perturbé par des oscillations du circuit de filtrage.

La figure 7 illustre un courant d'entrée régulé selon un mode de réalisation de l'invention.

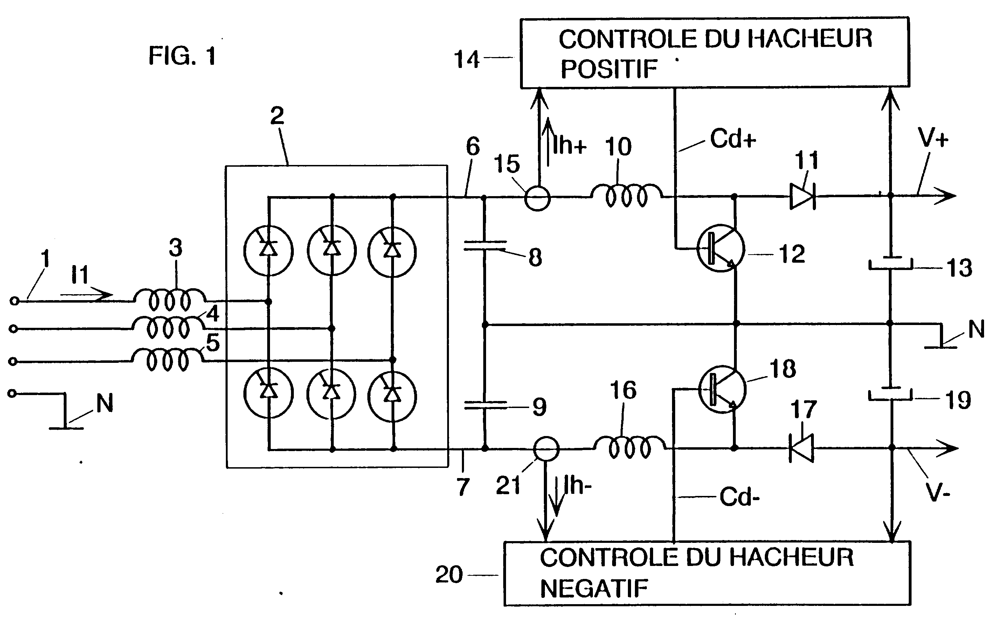

Le schéma de la figure 1 représente un convertisseur alternatif-continu de type connu. La ligne 1 d'entrée comporte trois conducteurs correspondant généralement aux conducteurs de phase d'un réseau de distribution électrique. Les conducteurs de la ligne d'entrée sont connectés à un circuit redresseur 2 de courant à travers des inductances 3, 4 et 5 de filtrage. Dans certains convertisseurs la ligne d'entrée comporte un conducteur neutre N, ce conducteur est alors utilisé comme référence lorsqu'il n'y a pas d'isolement électrique entre l'entrée et la sortie du convertisseur. Le circuit redresseur 2 fournit sur deux lignes le courant redressé, une première ligne 6 pour les composantes positives des courants d'entrée et une seconde ligne 7 pour les composantes négatives des courants d'entrée. Le redressement dans le circuit est effectué de manière connue par des diodes, des thyristors, ou par des redresseurs actifs à transistors. Les courants redressés issus du circuit de redressement 2 sont filtrés par des condensateurs 8 et 9. Sur la figure 1, les condensateurs 8 et 9 sont connectés respectivement entre la ligne 6 et le conducteur N et entre la ligne 7 et le conducteur N. Le filtrage des lignes 6 et 7 permet de fournir deux tensions d'alimentation indépendantes, une positive V+ et une négative V- par rapport au conducteur neutre N, en sortie du convertisseur. La régulation des tensions de sortie est réalisée par des circuits hacheurs connectés entre les lignes 6 et 7 filtrées et les sorties des tensions V+ et V- du convertisseur.

Un premier circuit hacheur positif comporte une inductance 10 connectée par une première extrémité à la ligne 6, une diode 11 connectée par son anode à une seconde extrémité de l'inductance 10 et par sa cathode à la sortie de tension positive V+, un transistor 12 de commutation de courant connecté par son collecteur au point commun entre l'inductance 10 et l'anode de la diode 11 et par son émetteur au conducteur de neutre N. Le transistor 12 reçoit sur sa base des signaux Cd+ de contrôle. Un condensateur 13 tampon est connecté entre la sortie positive V+ et le conducteur de neutre. Un circuit de contrôle 14 du hacheur positif commande le transistor 12 en fonction de la tension qu'il reçoit de la sortie V+ et de la valeur du courant du hacheur positif Ih+, c'est à dire du courant dans l'inductance 10, mesurée par un capteur 15. Un second circuit hacheur négatif ayant la même structure que le premier, mais de polarisation différente, comporte une inductance 16 connectée par une première extrémité à la ligne 7, une diode 17 connectée par sa cathode à une seconde extrémité de l'inductance 16, et par son anode à la sortie de la tension négative V-, un transistor 18 connecté par son émetteur au point commun entre l'inductance 16 et la cathode de la diode 17, par son collecteur au conducteur de neutre N. Le transistor 18 reçoit sur sa base des signaux Cd- de contrôle. Un condensateur 19 tampon est connecté entre la sortie négative V- et le conducteur de neutre. Un circuit 20 de contrôle du hacheur négatif commande la base du transistor 18 en fonction de la tension qu'il reçoit de la sortie V- et de la valeur du courant Ih- du hacheur négatif, c'est à dire du courant dans l'inductance 16, mesurée par un capteur 21.

De manière connue, lorsque le transistor 12 est conducteur, le courant dans l'inductance 10 augmente jusqu'à une valeur définie par le circuit de contrôle 14. Le transistor est alors bloqué et le courant emmagasiné dans l'inductance est transféré à travers la diode 11 dans le condensateur tampon 13 et une charge connectée sur la sortie positive V+. Ensuite, le transistor 12 est de nouveau conducteur, la diode 11 empêche la décharge du condensateur 13 vers le transistor 12, le courant augmente dans l'inductance 10 et le cycle continue. Le fonctionnement du hacheur négatif est analogue, les polarités des tensions et le sens des courants étant inversés.

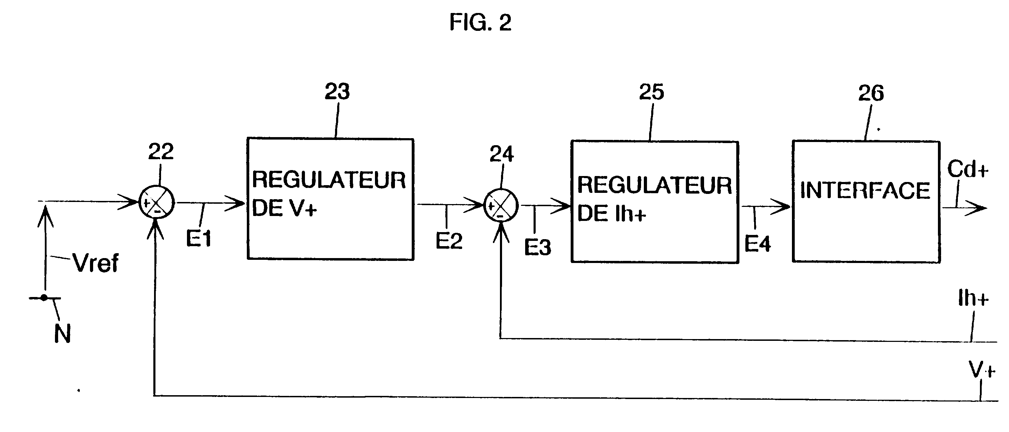

Un schéma bloc du fonctionnement du circuit de contrôle 14 du hacheur positif est représenté à la figure 2. Un premier opérateur 22 calcule la valeur E1 de la différence entre une tension Vref de consigne, référencée par rapport au conducteur de neutre, et la tension V+ de la sortie positive. Cette valeur E1 est appliquée à l'entrée d'un régulateur 23 de la tension V+. Le régulateur 23 fournit une valeur de correction E2 à un second opérateur 24 pour le calcul d'une valeur E3 représentant la différence entre la valeur E2 et la valeur Ih+ du courant du hacheur positif. La valeur E3 est appliquée à l'entrée d'un régulateur 25 du courant Ih+ du hacheur positif. La sortie du régulateur 25 fournit une valeur E4 de régulation à un circuit d'interface 26 pour la commande du transistor 12 par le signal Cd+. Les régulateurs 23 et 25 comportent, de manière connue, des associations d'éléments opérationnels tels que des intégrateurs, des dérivateurs, des comparateurs, des atténuateurs ou des amplificateurs linéaires ou complexes. La régulation du hacheur positif comporte, dans ce mode de réalisation, une boucle régulation du courant Ih+ imbriquée dans une boucle générale de régulation de la tension V+ de sortie.

Le circuit de contrôle 20 du hacheur négatif fonctionne de manière analogue au circuit de contrôle 14. La fréquence de fonctionnement des hacheurs est généralement de 10 à 50 KHz. Le filtre composé par les inductances 3, 4, 5 et les condensateurs 8 et 9, doit filtrer efficacement les courants de fonctionnement des hacheurs. Les valeurs des inductances et des condensateurs peuvent être par exemple respectivement de l'ordre de 1mH et de 10 µF. Ce filtre est de type LCR, où R correspond à la résistance série, de faible valeur, des lignes 1 d'entrée et du réseau.

Le redressement des courants alternatifs de la ligne d'entrée, par le pont redresseur 2, provoque des échelons de courant qui excitent le filtre LC 3, 4, 5, 8, 9. Lorsque le filtre est excité, des oscillations faiblement amorties perturbent le courant dans le réseau.

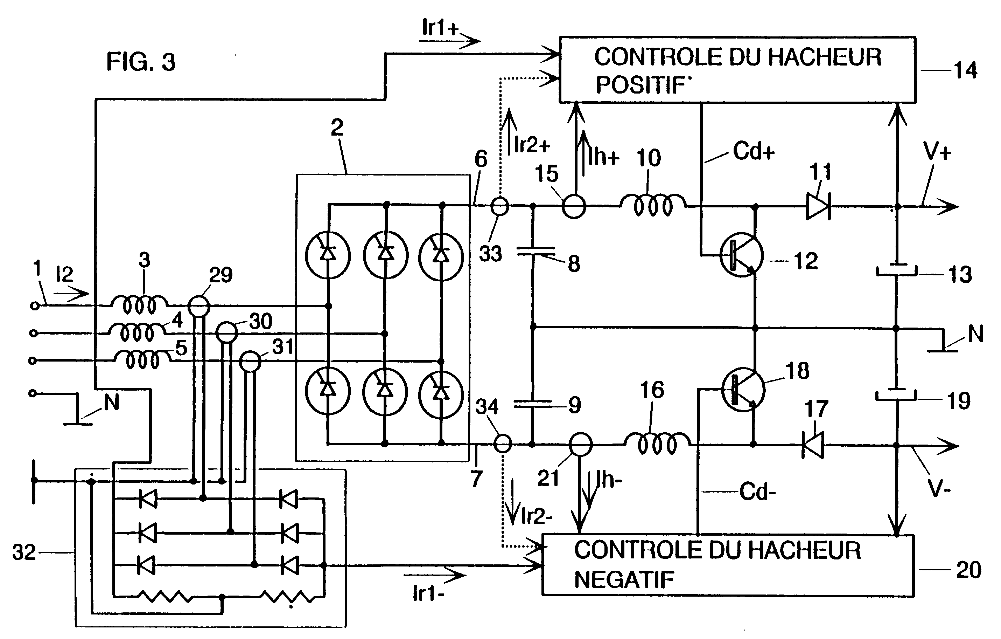

La figure 3 montre un mode de réalisation de l'invention qui amortit les oscillations dues à l'excitation du filtre. Le convertisseur selon la figure 1 est complété par des capteurs 29, 30 et 31, représentés par des transformateurs de courant disposés sur chaque conducteur de la ligne d'entrée, par exemple entre les inductances 3, 4, 5 et le circuit redresseur 2, fournissant des courants secondaires représentatifs des courants circulant dans le filtre et le redresseur. Les sorties des capteurs sont connectées à l'entrée d'un circuit 32 de détection des valeurs des composantes positive Ir1+ et négative Ir1- des courants secondaires des capteurs. Les valeurs Ir1+ et Ir1- sont fournies à des entrées des circuits de contrôle, respectivement 14 et 20, pour que les hacheurs soient commandés de manière à amortir les oscillations du filtre.

Des valeurs représentatives des composantes positive Ir2+ et négative Ir2- des courants circulant dans le filtre et le redresseur peuvent être mesurés par des capteurs 33 et 34 placés en sortie du redresseur, entre le redresseur et les condensateurs, respectivement 8 et 9. Les composantes positive et négative sont, dans ce cas, séparées par le circuit redresseur 2. Un circuit de détection n'est alors plus utile et les valeurs Ir2+ et Ir2- sont appliquées directement à des entrées des circuits de contrôle respectivement 14 et 20.

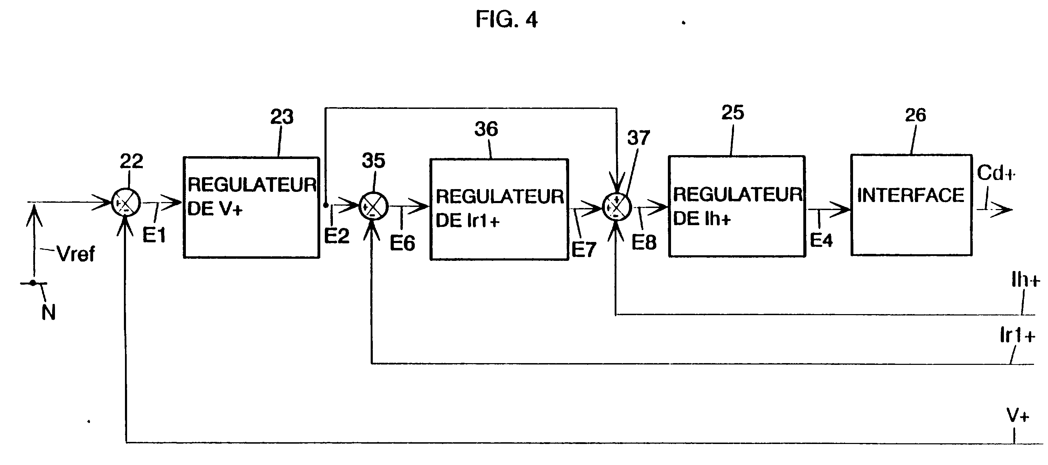

Pour que les hacheurs participent à l'amortissement des oscillations du filtre, les valeurs des courants Ir1+, Ir1- ou Ir2+ et Ir2- sont intégrées dans une boucle de régulation supplémentaire des circuits de contrôle 14 et 20. La figure 4 montre un mode de réalisation de la régulation du circuit 14 de contrôle du hacheur positif de la figure 3, intégrant une boucle de régulation du courant du filtre. La tension V+ de sortie est comparée par le premier opérateur à une valeur référence Vref. La valeur E1 de la différence entre ces deux valeurs est traitée par le régulateur 23 de tension. En sortie du régulateur 23 une valeur E2 est appliquée à une entrée d'un troisième opérateur 35 et éventuellement à une entrée d'un quatrième opérateur 37. Le troisième opérateur 35 fournit une valeur E6 représentative de la différence entre la valeur E2 et la valeur du courant du filtre Ir1+. Un circuit de régulation de courant 36 reçoit la valeur E6 et fournit en sortie une valeur E7 de régulation. Cette valeur E7 est appliquée sur une entrée du quatrième opérateur 37 qui peut recevoir aussi la valeur E2 de sortie du régulateur 23. L'opérateur 37 effectue le calcul d'une valeur E8 représentative de la différence entre la somme des deux valeurs régulées E7 et E2 et la valeur Ih+ du courant du hacheur positif. La valeur E8 est fournie au régulateur 25 de courant. La sortie du régulateur 25 fournit une valeur E4 au circuit d'interface 26 pour la commande du transistor 12.

Lorsque le courant Ir1+ augmente rapidement dans le filtre, l'opérateur 35 fournit une valeur E6 différente de zéro et négative. Cette diminution de la valeur E6 est traitée par le régulateur 36 et entraine une diminution de E8. Cette diminution de E8 est traitée par le régulateur 25, puis le circuit d'interface commande le transistor à l'ouverture de manière à faire absorber le courant excédant par la capacité 13. Cette dernière joue le rôle d'amortisseur. Si le courant du filtre baisse rapidement, la valeur E6 croît, entrainant une commande de la fermeture du transistor. La structure et le fonctionnement des circuits 14 et 20 de contrôle sont identiques. Une première boucle contrôle la tension V+ de sortie par rapport à une tension de consigne Vref. Une seconde boucle imbriquée dans la première boucle régule le courant Ir1+ du filtre et une troisième boucle imbriquée dans la deuxième boucle régule le courant Ih+ du hacheur.

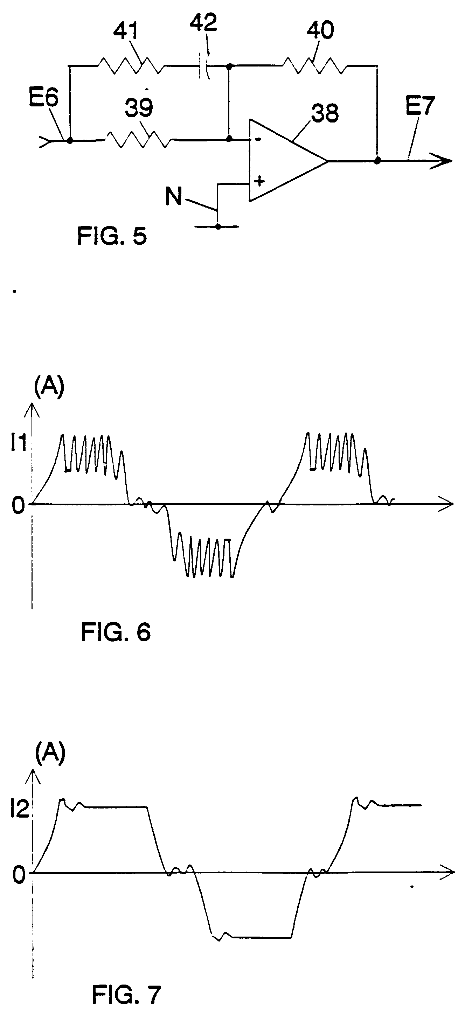

Le schéma d'un mode de réalisation du circuit 36 de régulation du courant Ir1+ du filtre est représenté à la figure 5. Le circuit 36 comporte un amplificateur opérationnel 38. Une résistance 39 est connectée entre l'entrée du circuit, recevant la valeur E6, et l'entrée inverseuse de l'amplificateur 38. Une résistance 40 est connectée entre l'entrée inverseuse et la sortie de l'amplificateur 38. Une résistance 41 est connectée en série avec un condensateur 42 entre l'entrée du circuit et l'entrée inverseuse. L'entrée non inverseuse est connectée au conducteur de référence N et la sortie de l'amplificateur fournit en sortie du circuit la valeur E7 de régulation. Le gain minimal du circuit, en continu, correspond au rapport entre la valeur de la résistance 40 et la valeur de la résistance 39. Lorsque la fréquence de la valeur E6 d'entrée augmente, l'impédance formée par la résistance 41 et le condensateur 42 diminue et le gain du circuit augmente. Ce circuit est un dérivateur préservant la stabilité de la régulation en effectuant une avance de phase.

La figure 6 illustre un courant I1 d'entrée perturbé par des oscillations du filtre dans un convertisseur selon le mode de réalisation de la figure 1. A chaque demi-alternance les composants du circuit redresseur se mettent en conduction et de rapides variations de courant provoquent des oscillations peu amorties. La figure 7 montre une courbe d'un courant d'entrée I2, dans un convertisseur selon le mode de réalisation de la figure 3, où les oscillations ont été amorties par les hacheurs.

Dans les modes de réalisation décrits ci-dessus les circuits de contrôle peuvent être réalisés aussi bien par des circuits analogiques, numériques que par des circuits programmés. Ils sont utilisés pour la commande de hacheurs tels que ceux de la figure 3, mais il pourraient commander tout dispositif de régulation de courant continu différent des hacheurs.

Les capteurs de courant 29, 30, 31, 33 et 34 peuvent être des transformateurs de courant ou tout autre composant, permettant de mesurer le courant, tels que des résistances de faibles valeurs, ou des cellules à effet Hall munies d'amplificateurs et de circuits de traitement. Les boucles de régulation ont été décrites suivant un ordre d'imbrication particulier, mais d'autres modes de réalisation peuvent être réalisés avec des ordres différents ou contenir des boucles de régulation supplémentaires.

## Revendications

1. Convertisseur alternatif-continu comportant :
- une ligne (1) d'entrée comportant au moins deux conducteurs connectés à une source de courant alternatif
- des moyens de redressement (2) et de filtrage (3, 4, 5, 8, 9) connectés à la ligne d'entrée,
- des moyens (10-21) de contrôle et de régulation d'au moins une tension continue de sortie (V+, V-) connectés à la sortie des moyens de redressement et de filtrage et comprenant un circuit hacheur positif et un circuit hacheur négatif,
- des moyens (29-31) de mesure du courant dans les moyens de redressement et de filtrage, et
- des moyens de régulation de la tension de sortie en fonction des courants mesurés par lesdits moyens de mesure,
convertisseur caractérisé en ce que les moyens de mesure comportent des moyens de détection (32, 33, 34) fournissant aux moyens de régulation des signaux représentatifs des composantes positives (Ir1+, Ir2+) et négatives (Ir1-, Ir2-) des courants mesurés, les moyens de régulation commandant le circuit hacheur positif en fonction de la composante positive et le circuit hacheur négatif en fonction de la composante négative.

2. Convertisseur selon la revendication 1 caractérisé en ce que les moyens de redressement et de filtrage comportent un circuit redresseur (2), les moyens de mesure du courant (29, 30, 31) mesurant les courants d'entrée du circuit redresseur (2).

3. Convertisseur selon la revendication 2 caractérisé en ce que les moyens de mesure du courant comportent un transformateur de mesure de courant (29, 30, 31) associé à chaque conducteur de la ligne.

4. Convertisseur selon la revendication 1 caractérisé en ce que les moyens de redressement et de filtrage comportent un circuit redresseur (2), les moyens de mesure du courant (33, 34) mesurant les courants (Ir2+, Ir2-) de sortie du circuit redresseur (2).

5. Convertisseur selon l'une quelconque des revendications 1 à caractérisé en ce que les moyens de régulation comportent des moyens (15, 21) de mesure de courants (Ih+, Ih-) des circuits hacheurs, des moyens de mesure de la tension (V+, V-) de sortie, et un circuit de contrôle (14, 20) comportant des entrées connectées aux moyens de mesure de courants dans les moyens de redressement et de filtrage, aux moyens de mesure de courants des circuits hacheurs et aux moyens de mesure de la tension de sortie, le circuit de contrôle comportant au moins une sortie (Cd+, Cd-) connectée à une entrée de commande des circuits hacheurs.

6. Convertisseur selon la revendication 5 caractérisé en ce que le circuit (14, 20) de contrôle comporte une première boucle de régulation comportant un premier opérateur (22), connecté aux moyens de mesure de la tension de sortie, et un régulateur (23) de tension, une seconde boucle de régulation comportant un second opérateur (35), connecté aux moyens de mesure du courant dans les moyens de redressement et de filtrage, et un régulateur (36) de courant, et d'une troisième boucle de régulation comportant un troisième opérateur (37), connecté aux moyens de mesure du courant du hacheur, et un régulateur (25) de courant.

7. Convertisseur selon l'une quelconque des revendications 1 à 6, caractérisé en ce que la ligne d'entrée comporte un conducteur neutre de référence (N), les moyens de redressement et de filtrage comportant un premier condensateur (8) de filtrage, connecté entre une première sortie (6) desdits moyens et le conducteur neutre, et un second condensateur (9) de filtrage, connecté entre une seconde sortie (7) desdits moyens et le conducteur neutre, lesdits hacheurs positifs et négatifs (10-13, 16-19), connectés respectivement entre le conducteur neutre et les première et seconde sorties, fournissant deux tensions de sortie, l'une positive (V+) et l'autre négative (V-) par rapport au potentiel du conducteur neutre.

## Patentansprüche

1. Wechselstrom-Gleichstrom-Umrichter, der
- eine aus mindestens zwei, an eine Wechselstromquelle angeschlossenen Leitern bestehende Einspeiseleitung (1),
- an die Einspeiseleitung angeschlossene Gleichrichtermittel (2) und Filtermittel (3, 4, 5, 8, 9),
- an den Ausgang der Gleichrichtermittel und Filtermittel angeschlossene und eine positive Zerhackerschaltung sowie eine negative Zerhackerschaltung umfassende Mittel (10-21) zur Steuerung und Regelung mindestens einer Ausgangsgleichspannung (V+, V-),
- Mittel (29-31) zur Messung des Stroms in den Gleichrichtermitteln und Filtermitteln sowie
- Mittel zur Regelung der Ausgangsspannung in Abhängigkeit der von den genannten Meßmitteln gemessenen Ströme umfaßt,
dadurch gekennzeichnet, daß die Meßmittel Erfassungsmittel (32, 33, 34) umfassen, die den Regelungsmitteln Signale zuführen, welche die positiven (Ir1+, Ir2+) und negativen (Irl-, Ir2-) Komponenten der gemessenen Ströme abbilden, wobei die Regelungsmittel die positive Zerhackerschaltung in Abhängigkeit von der positiven Komponente und die negative Zerhackerschaltung in Abhängigkeit von der negativen Komponente ansteuern.

2. Umrichter nach Anspruch 1, dadurch gekennzeichnet, daß die Gleichrichtermittel und Filtermittel eine Gleichrichterschaltung (2) umfassen, wobei die Strommeßmittel (29, 30, 31) die Eingangsströme der Gleichrichterschaltung (2) messen.

3. Umrichter nach Anspruch 2, dadurch gekennzeichnet, daß die Strommeßmittel einen, jedem Leiter der Einspeiseleitung zugeordneten Strommeßwandler (29, 30, 31) umfassen.

4. Umrichter nach Anspruch 1, dadurch gekennzeichnet, daß die Gleichrichtermittel und Filtermittel eine Gleichrichterschaltung (2) umfassen, wobei die Strommeßmittel (33, 34) die Ausgangsströme (Ir2+, Ir2-) der Gleichrichterschaltung (2) messen.

5. Umrichter nach irgendeinem der Ansprüche 1 bis 4, dadurch gekennzeichnet, daß die Regelungsmittel Mittel (15, 21) zur Messung der Ströme (Ih+, Ih-) in den Zerhackerschaltungen, Mittel zur Messung der Ausgangsspannung (V+, V-) sowie eine Steuerschaltung (14, 20) mit Eingängen umfassen, die an die Mittel zur Messung der Ströme in den Gleichrichtermitteln und Filtermitteln, an die Mittel zur Messung der Ströme in den Zerhackerschaltungen sowie an die Mittel zur Messung der Ausgangsspannung angeschlossen sind, wobei die Steuerschaltung mindestens einen Ausgang (Cd+, Cd-) umfaßt, der an einen Steuereingang der Zerhackerschaltungen angeschlossen ist.

6. Umrichter nach Anspruch 5, dadurch gekennzeichnet, daß die Steuerschaltung (14, 20) einen ersten Regelkreis, der einen, an die Mittel zur Messung der Ausgangsspannung angeschlossenen ersten Operator (22) sowie einen Spannungsregler (23) umfaßt, einen zweiten Regelkreis, der einen, an die Mittel zur Messung des Stroms in den Gleichrichtermitteln und Filtermitteln angeschlossenen zweiten Operator (35) sowie einen Stromregler (36) umfaßt, und einen dritten Regelkreis umfaßt, der einen, an die Mittel zur Messung des Stroms im Zerhacker angeschlossenen dritten Operator (37) sowie einen Stromregler (25) umfaßt.

7. Umrichter nach irgendeinem der Ansprüche 1 bis 6, dadurch gekennzeichnet, daß die Einspeiseleitung einen Bezugs-Neutralleiter (N) umfaßt, wobei die Gleichrichtermittel und Filtermittel einen, zwischen einen ersten Ausgang (6) der genannten Mittel und den Neutralleiter geschalteten ersten Filterkondensator (8) sowie einen, zwischen einen zweiten Ausgang (7) der genannten Mittel und den Neutralleiter geschalteten zweiten Filterkondensator (9) und die genannten, zwischen den Neutralleiter und den ersten bzw. zweiten Ausgang geschalteten, positiven und negativen Zerhacker (10-13, 16-19) umfassen, die zwei Ausgangsspannungen liefern, von denen eine (V+) positiv und die andere (V-) negativ in Bezug zum Neutralleiterpotential ist.

## Claims

1. An AC-DC converter comprising :
- an input line (1) comprising at least two conductors connected to an AC source,
- means for rectifying (2) and filtering (3, 4, 5, 8, 9) connected to the input line,
- control and regulating means (10-21) for control and regulation of at least one DC output voltage (V+, V-) connected to the output of the means for rectifying and filtering and comprising a positive chopper circuit and a negative chopper circuit,
- measuring means (29-31) for measuring the current in the means for rectifying and filtering, and
- regulating means for regulating the output voltage according to the currents measured by said measuring means,
a converter characterized in that the measuring means comprise detection means (32, 33, 34) supplying to the regulating means signals representative of the positive component (Ir1+, Ir2+) and negative component (Ir1-, Ir2-) of the measured currents, the regulating means controlling the positive chopper circuit according to the positive component and the negative chopper circuit according to the negative component.

2. The converter according to claim 1 characterized in that the rectifying and filtering means comprise a rectifier circuit (2), the current measuring means (29, 30, 31) measuring the input currents of the rectifier circuit (2).

3. The converter according to claim 2 characterized in that the current measuring means comprise a current measuring transformer (29, 30, 31) associated to each line conductor.

4. The converter according to claim 1 characterized in that the rectifying and filtering means comprise a rectifier circuit (2), the current measuring means (33, 34) measuring the output currents (Ir2+, Ir2-) of the rectifier circuit (2).

5. The converter according to any one of the claims 1 to 4 characterized in that the regulating means comprise means (15, 21) for measuring the chopper circuit currents (Ih+, Ih-), means for measuring the output voltage (V+, V-), and a control circuit (14, 20) comprising inputs connected to the means for measuring the currents in the rectifying and filtering means, to the means for measuring the chopper circuit currents and to the means for measuring the output voltage, the control circuit comprising at least one output (Cd+, Cd-) connected to a control input of the chopper circuits.

6. The converter according to claim 5 characterized in that the control circuit (14, 20) comprises a first regulating loop comprising a first operator (22), connected to the means for measuring the output voltage, and a voltage regulator (23), a second regulating loop comprising a second operator (35), connected to the means for measuring the current in the rectifying and filtering means, and a current regulator (36), and a third regulating loop comprising a third operator (37), connected to the means for measuring the chopper current, and a current regulator (25).

7. The converter according to any one of the claims 1 to 6 characterized in that the input line comprises a reference neutral conductor (N), the means for rectifying and filtering comprising a first filtering capacitor (8), connected between a first output (6) of said means and the neutral conductor, and a second filtering capacitor (9), connected between a second output (7) of said means and the neutral conductor, said positive and negative choppers (10-13, 16-19), respectively connected between the neutral conductor and the first and second outputs, supplying two output voltages, one positive (V+) and the other negative (V-) with respect to the potential of the neutral conductor.
